# EUROPEAN PATENT SPECIFICATION

(11) **EP 0 333 901 B1**
(45) Date of publication and mention of the grant of the patent: **29.06.1994**
(21) Application number: 88104665.0
(22) Date of filing: 23.03.1988
(51) Int. Cl.: B60R 1/06

(54) **Control system for foldable outside rearview mirror**
Steuerungssystem für einen einklappbaren Aussen-Rückspiegel
Système de commande pour un miroir rétroviseur extérieur pliable

(43) Date of publication of application: 27.09.1989
(73) Proprietor: MURAKAMI KAIMEIDO CO., LTD, Shizuoka 422 (JP)
(72) Inventor: Yamana, Tohru, Shizuoka-ken, 426-01 (JP); Nakayama, Kiyoshi, Shizuoka-shi Shizuoka-ken, 420 (JP); Sato, Kazuhiko c/o Omuron Tateishi Electronics Co., Kyoto-shi Kyoto-fu, 616 (JP)
(74) Representative: Riederer Freiherr von Paar zu Schönau, Anton

(56) References cited:
- GB-A- 2 155 876
- GB-A- 2 159 782
- PATENT ABSTRACTS OF JAPAN, vol. 11, no. 21 (M-555)[2468], 21st January 1987;& JP-A-61 193 948 (TOYOTA MOTOR CORP.) 28-08-1986
- PATENT ABSTRACTS OF JAPAN, vol. 8, no. 152 (M-309)[1589], 14th July 1984;& JP-A-59 48 245 (MITSUBISHI DENKI K.K.) 19-03-1984

## Description

### Background of the Invention

This invention relates to a control system for a foldable outside rearview mirror driven by an electric motor, to be connected to a power source, comprising an operation switch, trigger means for outputting a trigger pulse upon actuation of said operation switch, timer means for outputting a pulse of a predetermined pulse width to drive the electric motor only for a set time upon receipt of the trigger pulse from the trigger means at its input, polarity changing means for reverse-switching the drive of the electric motor by inverting a pair of the outputs of high and low levels upon receipt of the trigger pulse from the trigger means, switching means for switching a voltage applied to the electric motor to erect or fold the rearview mirror upon receipt of the output of the polarity changing means and an electric motor circuit. Such outside rearview mirror can be folded both of forwardly and backwardly by a remote control from inside of the motor vehicle.

A foldable rearview mirror of this type is generally erected or folded by rocking a mirror body when an electric motor for folding the rearview mirror mounted in the mirror body is driven by operating switches provided in the compartment of the motor vehicle.

JP-A-59-48245 discloses a control system for an outside rearview mirror driven by an electric motor. The control system is provided with a trigger means and polarity changing means separately. Therefore the circuit of the system is complicate and comprises a plurality of electrical elements.

GB-A-2 155 876 discloses a door mirror for use in a motor vehicle which comprises a stay secured on an outer surface of a door and pivotably supporting a mirror visor thereon.

In JP-A-60-215444, a control system is described which is composed of a seesaw type changeover switch, a pair of timer circuits for outputting ON signals only for a predetermined time upon receipt of an output signal from the switches to erect and fold a rearview mirror to a predetermined position, and a relay circuit for switching the polarity of the power source of an electric motor for driving the rearview mirror upon receipt of ON/OFF by the timer circuits. In this system, there are disadvantages that the operation switch is limited to the seesaw type changeover switch, the electric motor is caused to stop because of the output terminal of the relay being shortcircuited when the switch is operated during the operation of the timer circuits and the mirror body might be rotated in an opposite direction after the electric motor is gradually stopped.

### Summary of the Invention

It is therefore an object of this invention to provide a compact and reliable control system for a foldable outside rearview mirror for erecting and folding the mirror body the system circuit minimizing the number of electrical elements and enabling the circuit composition to be simple.

In order to achieve the object of the invention and to overcome the problems of the prior art, the control system of the invention is characterized in that said trigger means and said polarity changing means comprise dual D-type flip-flop integrated circuits, and of said flip-flop integrated circuit of the trigger means, the first input terminal is connected to one terminal of the power source, the second input terminal is connected via a chatter preventing means and the operation switch to the terminal of the power source, and the output terminal is connected to the clock input terminal of the flip-flop integrated circuit of said polarity changing means, to the input terminal of said timer means and via a time constant circuit to the reset terminal of this flip-flop integrated circuit of the trigger means.

An automatic reset one-touch type push-button switch is employed as an operation switch. The changing means and the timer means are operated through the trigger means by the operation switch, and the electric motor is operated in the polarity (for erecting or folding the mirror) set by the changing means for a period of time set by the timer means to erect or fold the rearview mirror to a predetermined position. Further, when the operation switch is operated during the operation of the timer, the electric motor is reversed to reverse the swinging operation of the rearview mirror immediately. The motor means includes the electric motor for swinging the mirror body and a limit switch group for stopping the electric motor when the mirror body is rotated to a predetermined position. Erroneous operation is eliminated by an immediate reverse rotation without a shortcircuit or a stoppage of the mirror when operation switches are operated during the operation of a timer.

The above and other objects, features and advantages of the present invention will become apparent from the following description and the appended claims taken in conjunction with the accompanying drawings which show by way of example a preferred embodiment of the present invention.

### Brief Description of the Drawings

In the accompanying drawings:
Fig. 1 is a schematic front view of a control system for a foldable outside rearview mirror according to a preferred embodiment of the present invention;
Fig. 2 is a schematic diagram of the control system; and
Fig. 3 is a timing chart of Fig. 2.

### Description of the Preferred Embodiment

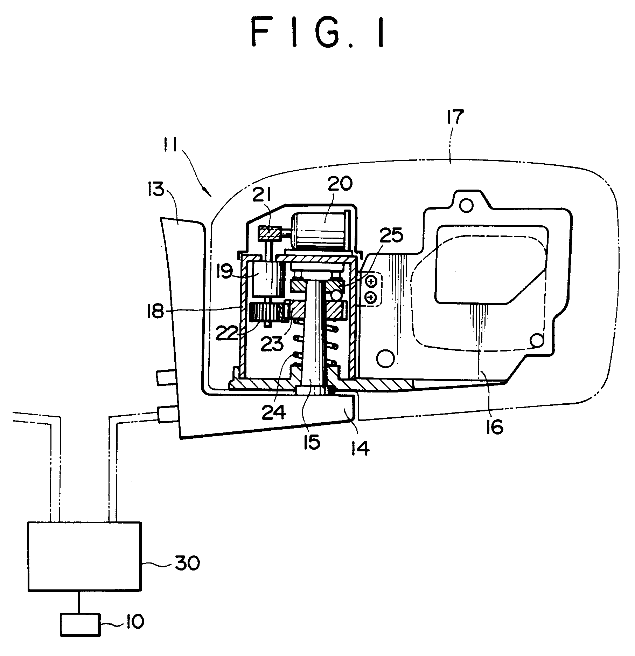

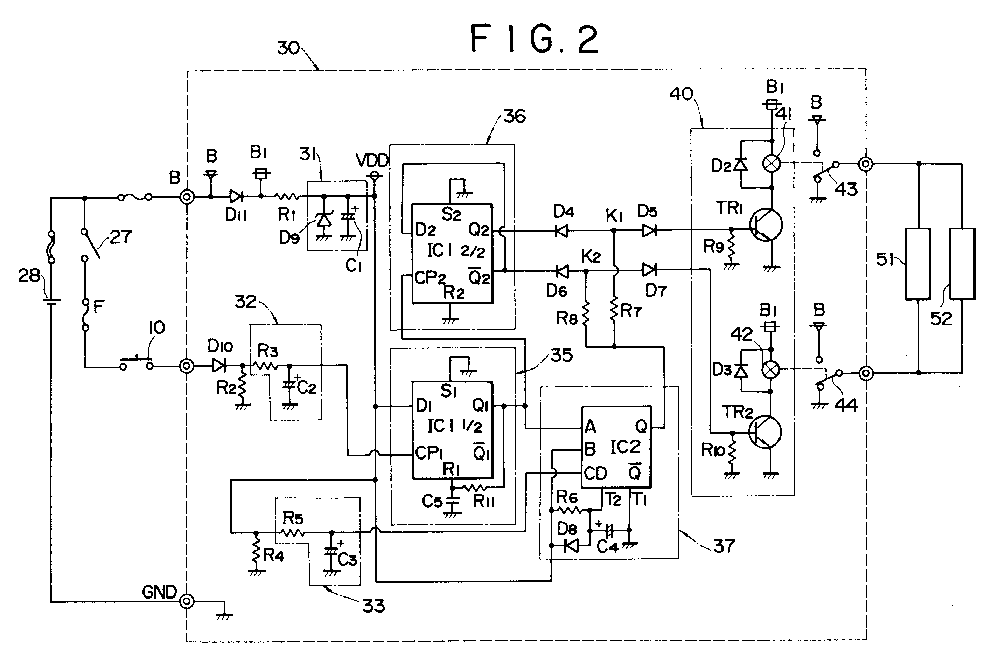

The present invention will now be described in detail with reference to the drawings. Referring first to Fig. 1, there is shown an outside rearview mirror assembly suitable to be associated with a motor vehicle. This system includes an operation switch 10 of an automatic reset type one-touch button switch provided in a compartment, a controller 30, right and left mirror assemblies 11 and motor circuits 51, 52 (Fig. 2). Each mirror assembly 11 includes a shaft 15 standing on the extension 14 of a base 13, a frame 16 rotatably supported on and by the shaft 15, a mirror body 17, a gear box 18 provided in the rotary portion of the frame 16 near the shaft, a reduction gear mechanism 19 contained in the gear box 18 and an electric motor 20 secured to the top of the gear box 18 for electrically folding the mirror body. Fig. 1 only shows the right mirror assembly for simplicity of illustration and the left mirror assembly is omitted therefrom.

As shown in Fig. 1, the reduction gear mechanism 19 is composed of a reduction gear train coupled to a worm gear 21 on the output shaft of the electric motor 20 and an end gear 22 is engaged in meshing contact with a clutch gear 23 mounted on the shaft 15. The clutch gear 23 is energized or urged towards a clutch gear retainer 25 secured to the upper end portion of the shaft, by means of the elasticity of a helical spring 24. When the mirror, e.g. a door mirror, is erected, that is, disposed to its neutral position, the electric motor 20 is driven by a function supplied by the controller 30 operated by the operation switch 10 which is provided in the compartment, the end gear 22 is rotated through the worm gear 21 and the reduction gear mechanism 19 in Fig. 1. Since the clutch gear 23 engaged in meshing contact witch the end gear 22 is mounted on the shaft 15 biased by the elasticity of the spring 24, the clutch gear 23 remains secured to the shaft 15 when a predetermined rotary torque or less is applied thereto. Thus, the rotary force of the end gear 22 is converted to a circular motion with centering around the shaft 15, and thereby the mirror body 17 is rotated in a folding direction by the movements of said gear 22. When the electric motor 20 is reversely rotated, the mirror body is swung from the folded position toward the erected position to return to the original position.

Fig. 2 is a schematic diagram of the control system. The controller 30 is connected, at the input side thereof, with the operation switch 10, an ignition switch 27 and a battery 28, while the motor circuits 51, 52 are connected to the output side of the controller 30. The controller 30 includes a constant-voltage circuit 31, a chatter preventing circuit 32, a delay circuit 33, a trigger circuit 35, a polarity changing circuit 36, a timer circuit 37 and a switching circuit 40.

The motor circuits 51 and 52 are respectively associated to the right and left mirror assemblies. Each motor circuit includes one of the electric motors 20 for folding the mirror body 17 in the folding direction when a current flows from a contact 43 to a contact 44, and for erecting the mirror body 17 when the current flows reversely from the contact 44 to the contact 43. Said motor circuits also include limit switch groups (not shown) for energizing or deenergizing the motor circuits 51, 52 when the mirror body 17 has reached a predetermined folded or erected position by driving the respective motor 20.

The trigger circuit 35 inculdes a flip-flop IC1 1/2, a resistor R₁₁ and a capacitor C₅ connected to a reset terminal R₁ of the flip-flop. A pulse for an operation signal may be inputted from the automatic reset one-touch type push-button 10 through the chatter preventing circuit 32 to the input terminal CP₁ of the IC1 1/2. The output of the first output terminal Q₁ of the IC1 1/2 is returned to the reset terminal R₁ through the resistor R₁₁ and delayed by the capacitor C₅. When the output of the first output terminal Q₁ becomes "H" level, the flip-flop is reset after a short time to output a trigger pulse having a narrow pulse width. This pulse is inputted to the input terminal CP₂ of a FP IC1 2/2 which constitutes the polarity changing circuit 36, and to the input terminal A of a timer IC2.

The IC1 2/2 produces outputs Q₂, Q̅₂̅ every time the trigger output Q₁ of the IC1 1/2 is inputted to the input terminal CP₂ of the IC1 2/2. Diodes D₄ to D₇ are connected in parallel to the output side of the IC1 2/2 and connected to the output terminal Q of the timer IC2 through resistors R₇, R₈ connected to the dividing points K₁, K₂, of the diodes D₄ and D₅, D₆ and D₇, respectively.

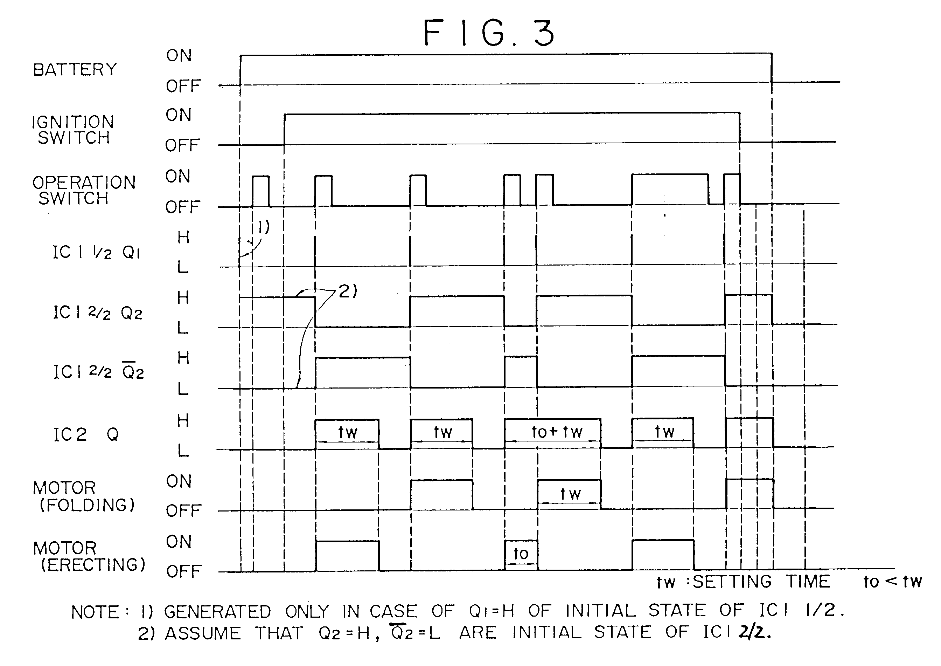

The timer circuit 37 includes the timer IC2 which is a retriggerable monostable multivibrator, a resistor R₆, a capacitor C₄ and a diode D₈ connected to the side of terminals T₁, T₂ as shown in the drawing, and a voltage applied to the input terminal CD rises, delayed by the resistor R₅ and the capacitor C₃, to the supplied voltage V_{DD} at the initial state of connecting the battery (Fig. 3). The output pulse width of the first output terminal Q can be set to a predetermined value tw (outputting time) by the resistor R₆ and the capacitor C₄ connected to the terminals T₁' T₂, and said output pulse is applied to the dividing points K₁, K₂ of the input side of the switching circuit 40.

The switching circuit 40 includes transistors TR₁, TR₂ which operate upon receipt of an input signal "H" at the bases from the points K₁, K₂ of the input side, and relays 41, 42 connected to said transistors to switch the normal or reverse rotation of the motor of folding or errecting the mirror by driving the motor circuits 51, 52 through the relay contacts 43, 44.

### Operation

The operation of the control system constructed as described above will be described. After the battery 28 via the ignition switch 27 is connected, the automatic reset type one-touch push-button switch 10 is operated to generate a pulse having a predetermined width (approx. several microseconds) from the output terminal Q₁ of the FF IC1 1/2 of the trigger circuit 35. Then, the outputs Q₂, Q̅₂̅ of the FF IC1 2/2 for changing the polarity are inverted at the same time by the rise of a pulse, and the output Q of the timer IC2 is set for a predetermined time (e.g., 15 ± 5 sec.) determined by the capacitor C₄ and the resistor R₆, and the transistors TR₁, TR₂ are alternately operated via the diodes D₄ to D₇. In this manner, the relay 41 or 42 is switched to switch the normal or reverse rotation of the electic motor connected externally.

The operation of the control system will be described in more detail.

### Battery Connected

Since the input of the input terminal CD of the timer IC2 rises delayed by a time t₂ with reference to the B input by means of the delay circuit 33 when the battery is connected, the output Q of the IC2 is always set to "L" level in an initial state. If the output of the first output terminal Q₁ is "H", the FF IC1 1/2 is momentarily reset after a time t₁ by the pulse (having a width of several microseconds) determined by the time constant of the resistor R₁₁ and the capacitor C₅. Thus, the output of the terminal Q₁ of the IC1 1/2 becomes "L" again still in the initial state. In the initial state that the terminal Q₁ is "H", it is momentarily lowered to "L", while it being so set as to be t₁«t₂ (t₁ ∼ C₅·R₁₁, t₂ ∼ C₃·R₅) the input terminal CD of the IC2 becomes "H" upon the lapse of time t₂ determined by R₅ and C₃, and the timer IC is only thereafter controlled by the operation of the switch 10.

### Operation Switch Operated

When the ignition switch 27 is closed and the automatic one-touch push-button switch 10 is contacted, the output Q₁ of the IC1 1/2 becomes "H" to momentarily generate a pulse having a width of several microseconds as described above. Thus, the output terminals Q₂, Q̅₂̅, of the IC1 2/2 are inverted substantially at the same time irrespective of the operated time of the switch 10 and the magnitudes of the resistor R₃ and the capacitor C₂ of the chatter preventing circuit 32 and the pulse "H" having the predetermined time tw determined by the capacitor C₄ and the resistor R₆ can be outputted from the terminal Q of IC2. In this case, when the output terminals Q₂, Q̅₂̅ of the IC1 2/2 are respectively "H", "L", the transistor TR₁ is turned ON and the relay 41 is instantly actuated to drive the electric motor to fold the mirror body by the output "H" of the terminal Q of the IC2 and the electric motor stops after the time tw is elapsed.

### Reoperation of the Switch

When the operation switch 10 is pushed again after the motor stopped, the outputs Q₂, Q̅₂̅ of the IC1 2/2 are respectively inverted to "L", "H", the output Q of the IC2 becomes "H", the transistor TR₂ is turned ON and the relay 42 is actuated, and the electric motor is switched from folding to erecting the mirror body. Thus the relays 41, 42 are switched by the operation of the switch 10 to switch the electric motors alternately from folding to erecting the mirror body and vice versa. Since the initial state of the IC1 2/2 is not determined at the first input time by the operation of the push-button switch 10 after the battery has been connected, either folding or erecting the mirror body is not specified in the initial operation.

When the push-button switch 10 is operated again in a shorter time than the time tw determined by the capacitor C₄ and the resistor R₆ of the IC2 (during the operation of IC2) after the push-button switch 10 was operated before, the rotating direction of the electric motor is reversed. For instance, the electric motor is switched from folding to erecting the mirror body, and thereafter the mirror body is continuously erected for the time tw.

According to the present invention constructed as described above, the electric motor-driven foldable door mirror is not limited for its operation switch to a seesaw type changeover switch and the disadvantage of a shortcircuit at the output of the relay according to the time of switching the operation switch is prevented. Thus, the rearview mirror is prevented from unnatural operation even by any type of the operation switch and capable of being optionally switched and inverted in folding or erecting the mirror body.

## Claims

1. A control system for a foldable outside rearview mirror driven by an electric motor (20), to be connected to a power source (28), comprising:
an operation switch (10);
trigger means (35) for outputting a trigger pulse upon actuation of said operation switch (10);
timer means (37) for outputting a pulse of a predetermined pulse width (tw) to drive the electric motor (20) only for a set time upon receipt of the trigger pulse from the trigger means (35) at its input terminal (A);
polarity changing means (36) for reverse-switching the drive of the electric motor (20) by inverting a pair of the outputs (Q₂, Q̅₂̅) of high and low levels upon receipt of the trigger pulse from the trigger means (35);
switching means (40) for switching a voltage applied to the electric motor (20) to erect or fold the rearview mirror (17) upon receipt of the output of the polarity changing means (36); and
an electric motor circuit (51, 52),
characterized in that:
said trigger means (35) and said polarity changing means (36) comprise dual D-type flip-flop integrated circuits (IC1 1/2, IC1 2/2);
and the first input terminal (D₁) of said flip-flop integrated circuit (IC1 1/2) of the trigger means (35) is connected via a constant voltage circuit (31) to one terminal of the power source (28), the second input terminal (CP₁) is connected via a chatter preventing means (32) and the operation switch (10) to the terminal of the power source (28), and the output terminal (Q₁) is connected to the clock input terminal (CP₂) of the flip-flop integrated circuit (IC1 2/2) of said polarity changing means (36), to the input terminal (A) of said timer means (37) and via a time constant circuit (C₅R₁₁) to the reset terminal (R₁) of this flip-flop integrated circuit (IC1 1/2) of the trigger means (35).

2. The control system as claimed in claim 1, characterized in that said rearview mirror comprises a base (13), a shaft (15) stood on the base, a frame (16) rotatably supported by the shaft, a mirror body (17), electric-motor driving means (19, 20, 21) for rotating the mirror body, an end gear (22) provided at the output end of said electric-motor driving means, and a clutch gear (23) engaged on the shaft in meshing contact with the end gear (22).

3. The control system as claimed in claim 1 or 2, characterized in that said operation switch (10) is an automatic reset type one-touch push-button switch.

4. The control system as claimed in any of claims 1 to 3, characterized in that said switching means (40) comprises a pair of relays (41, 42), transistors (TR₁, TR₂) and relay contacts (43, 44).

5. The control system as claimed in any of claims 1 to 4, characterized in that said electric motor circuit (51, 52) comprises the electric motor (20) for swinging the mirror body (17) and a limit switch group for opening said circuit when the mirror body has arrived at a predetermined folded or erected position.

## Patentansprüche

1. Steuerungssystem für einen einklappbaren Außen-Rückspiegel, der von einem Elektromotor (20) angetrieben wird, zum Anschluß an eine Stromquelle (28), mit:
einem Betriebsschalter (10);
einer Triggereinrichtung (35) zum Abgeben eines Triggerimpulses auf die Betätigung des Betriebsschalters (10) hin;
einer Zeitgebereinrichtung (37) zum Abgeben eines Impulses einer gegebenen Impulsbreite (tw) zum Treiben des Elektromotors (20) nur für eine festgesetzte Zeit auf den Empfang an ihrer Eingangsklemme (A) des Triggerimpulses von der Triggereinrichtung (35) hin;
einer Polaritätswechseleinrichtung (36) zum Umkehrungsschalten des Antriebs des Elektromotors (20) durch Invertieren von zwei Ausgängen (Q₂, Q̅₂̅) von hohem und niedrigem Pegel auf Empfang des Triggerimpulses von der Triggereinrichtung (35) hin;
einer Schalterbetätigungseinrichtung (40) zum Schalten einer an den Elektromotor (20) angelegten Spannung zum Ausstellen oder Einklappen des Rückspiegels (17) auf den Empfang des Ausgangssignals der Polaritätswechseleinrichtung (36) hin;
und einer Elektromotorschaltung (51, 52),
dadurch gekennzeichnet, daß:
die Triggereinrichtung (35) und die Polaritätswechseleinrichtung (36) integrierte duale D-Flipflop-Schaltungen (IC1 1/2, IC1 2/2) umfassen;
und daß die erste Eingangsklemme (D₁) der integrierten Flipflopschaltung (IC1 1/2) der Triggereinrichtung (35) über eine Konstantspannungs-Schaltung (31) mit einer Klemme der Stromquelle (28) verbunden ist, die zweite Eingangsklemme (CP₁) über eine ein Rattern verhindernde Einrichtung (32) und den Betriebsschalter (10) mit der Klemme der Stromquelle (28) verbunden ist und die Ausgangsklemme (Q₁) mit dem Takteingang (CP₂) der integrierten FlipflopSchaltung (IC1 2/2) der Polaritätswechseleinrichtung (36), mit der Eingangsklemme (A) der Zeitgebereinrichtung (37) und über eine Zeitkonstantenschaltung (C₅R₁₁) mit der Rückstellklemme (R₁) dieser selben intergrierten FlipflopSchaltung (IC1 1/2) der Triggerschaltung (35) verbunden ist.

2. Steuerungssystem nach Anspruch 1, dadurch gekennzeichnet, daß der Rückspiegel eine Basis (13), eine auf der Basis stehende Welle (15), einen drehbar von der Welle getragenen Rahmen (16), einen Spiegelkörper (17), elektromotorische Antriebseinrichtungen (19, 20, 21) zum Drehen des Spiegelkörpers, ein Endzahnrad (22), das am Ausgangsende der elektromotorischen Antriebseinrichtung sitzt, und ein Kupplungszahnrad (23), das an der Welle in kämmendem Kontakt mit dem Endzahnrad (22) angreift, umfaßt.

3. Steuerungssystem nach Anspruch 1 oder 2, dadurch gekennzeichnet, daß der Betriebsschalter (10) ein Druckknopfschalter der Bauart mit automatischer Rückstellung für Einmalberührung ist.

4. Steuerungssystem nach einem der Ansprüche 1 bis 3, dadurch gekennzeichnet, daß die Schalterbetätigungseinrichtung (40) zwei Relais (41, 42), Transistoren (TR₁, TR₂) und Relaiskontakte (43, 44) umfaßt.

5. Steuerungssystem nach einem der Ansprüche 1 bis 4, dadurch gekennzeichnet, daß die Elektromotorschaltung (51, 52) den Elektromotor (20) zum Verschwenken des Spiegelkörpers (17) und eine Gruppe von Endschaltern zum Öffnen des Stromkreises, wenn der Spiegelkörper eine gegebene eingeklappte oder ausgestellte Stellung erreicht hat, umfaßt.

## Revendications

1. Système de commande pour rétroviseur extérieur repliable entraîné par un moteur électrique (20), devant être relié à une source de puissance (28), comprenant :
- un commutateur de commande (10) ;
- des moyens de production d'impulsions (35) pour délivrer une impulsion d'attaque lors de l'activation du commutateur de commande (10) ;
- des moyens de temporisation (37) pour délivrer une impulsion d'une largeur prédéterminée (tw) destinée à commander le moteur électrique (20) uniquement pendant un temps prédéterminé à la réception de l'impulsion des moyens de production d'impulsion (35) sur sa borne d'entrée (A) ;
- des moyens de changement de polarité (36) afin d'inverser la commande du moteur électrique (20) en inversant une paire de sorties (Q2, Q̅2̅) de niveaux haut et bas à la réception de l'impulsion des moyens de production d'impulsion (35) ;
- des moyens de commutation (40) pour commuter une tension appliquée au moteur électrique (20) afin de déplier ou replier le rétro-viseur extérieur (17) à la réception du signal de sortie des moyens de changement de polarité (36) ; et
- un circuit de moteur électrique (51, 52);
caractérisé en ce que :
lesdits moyens de production d'impulsion (35) et lesdits moyens de changement de polarité (36) comprennent une double bascule du type D en circuits intégrés (IC1 1/2, IC1 2/2) ;
et en ce que la première borne d'entrée (D₁) de ladite bascule en circuit intégré (IC1 1/2) des moyens de production d'impulsion (35) est reliée par un circuit (31) à tension constante à une borne de la source de puissance (28), en ce que la seconde borne d'entrée (CP₁) est reliée par des moyens de limitation de rebond (32) et le commutateur de commande (10) à la borne de la source de puissance (28), et en ce que la borne de sortie (Q₁) est reliée à la borne d'entrée d'horloge (CP₂) de la bascule en circuit intégré (IC1 2/2) desdits moyens de changement de polarité (36), à la borne d'entrée (A) desdits moyens de temporisa-tion (37) et, par un circuit à retard constant (C₅R₁₁), à la borne de ré-initialisation (R₁) de cette bascule en circuit intégré (IC1 1/2) des moyens de production d'impulsion (35).

2. Système de commande selon la revendication 1, caractérisé en ce que ledit rétroviseur extérieur comprend un socle (13), un axe (15) posé sur le socle, un cadre (16) supporté de façon à tourner autour de l'axe, un corps de miroir (17), des moyens d'entraînement par moteur électrique (19, 20, 21) pour faire tourner le miroir, un engrenage d'extrémité (22) ménagé à l'extrémité de sortie desdits moyens d'entraînement par moteur électrique, et un engrenage d'embrayage (23) accouplé à l'axe et en prise avec l'engrenage d'extrémité (22).

3. Système de commande selon la revendication 1 ou 2, caractérisé en ce que ledit commutateur de commande (10) est un commutateur à bouton poussoir sans accrochage, du type à rappel automatique.

4. Système de commande selon l'une des revendications 1 à 3, caractérisé en ce que lesdits moyens de commutation (40) comprennent une paire de relais (41, 42), des transistors (TR₁, TR₂) et des contacts de relais (43, 44).

5. Système de commande selon l'une des revendications 1 à 4, caractérisé en ce que ledit circuit de moteur électrique (51, 52) comprend le moteur électrique (20) pour faire osciller le corps de miroir (17) et un groupe de commutateurs de butée pour ouvrir ledit circuit lorsque le corps de miroir atteint une position replièe ou de déploiement prédéterminée.
